# EUROPEAN PATENT APPLICATION

(11) **EP 4 383 168 A1**
(43) Date of publication of application: **12.06.2024**
(21) Application number: 23189192.0
(22) Date of filing: 02.08.2023
(51) Int. Cl.: G06Q 20/20, G06Q 20/32, G06Q 20/40, G07G 1/00

(54) **SETTLEMENT SYSTEM**

(30) Priority: 05.12.2022 JP 2022194005
(71) Applicant: Toshiba TEC Kabushiki Kaisha, Tokyo 141-8562 (JP)
(72) Inventor: Matsuhisa, Kaoru, Tokyo, 141-8562 (JP)
(74) Representative: Hoffmann Eitle

(57) **Abstract**

A settlement system includes a settlement terminal to receive settlement amount information and perform a settlement for receiving a payment and a portable terminal with a biometric authentication function. The settlement terminal has an interface for receiving the settlement amount information, a first short-range communication unit, and a first control unit to control the first short-range communication to request a biometric identity verification by the portable terminal. The portable terminal has a second short-range communication unit and a second control unit configured to cause the biometric authentication function to be performed, and respond to the request for the biometric identity verification via the second short-range communication unit with an identity verification signal. The first control unit completes the settlement operation if the identity verification signal indicates the biometric identity verification was successful and not otherwise.

## Description

### CROSS-REFERENCE TO RELATED APPLICATION

This application is based upon and claims the benefit of priority from Japanese Patent Application No. 2022-194005, filed December 5, 2022, the entire contents of which are incorporated herein by reference.

### FIELD

Embodiments of the present disclosure relate to a transaction settlement system for retail stores and the like.

### BACKGROUND

When a customer pays for a commodity purchase in a store with a credit card or the like, the customer may use a settlement terminal for such a payment method. The settlement terminal communicates with a credit company or the like or the like and executes settlement processing using the credit card based on settlement amount information received from a POS terminal.

When the customer executes a credit transaction with the credit card at such a settlement terminal, the customer typically needs to perform an identity verification operation of some kind. For example, the customer performs an identity verification by, operating numeric keys provided on the settlement terminal and inputting a password or the like.

However, there is a risk that a password might be stolen when the password is input. In a settlement terminal of a type for displaying numeric keys on a touch panel, various measures such as arranging numeric keys at random have been proposed or utilized to limit such risk. However, even with such measures there remains a risk that the password might be stolen by others. Therefore, further improvement in security for performing an identity verification at a settlement terminal or the like is desirable.

### SUMMARY OF THE INVENTION

One of the objects of the present invention is to improve prior art techniques and overcome at least some of the prior art problems as for instance above illustrated. According to a first aspect of the present invention, it is provided a settlement system, comprising a settlement terminal configured to receive settlement amount information and perform a settlement operation for receiving a payment corresponding to the settlement amount information; and a portable terminal including a biometric authentication function, wherein the settlement terminal includes an interface for receiving the settlement amount information, a first short-range communication unit, and a first control unit configured to control the first short-range communication to request a biometric identity verification by the portable terminal after the settlement amount information has been received; and the portable terminal includes a second short-range communication unit, and a second control unit configured to cause the biometric authentication function to be performed, and respond to the request for the biometric identity verification via the second short-range communication unit with an identity verification signal; and the first control unit is further configured to complete the settlement operation if the identity verification signal indicates the biometric identity verification was successful and not otherwise.

Optionally, the settlement system according to the first aspect of the invention further comprises a commodity sales data processing apparatus configured to register items in a transaction, generate the settlement amount information according to the items registered in the transaction, and send the settlement amount information to settlement terminal.

Optionally, in the settlement system according to the first aspect of the invention, the commodity sales data processing apparatus includes a settlement method selection key, and an identity verification requesting operation element which when operated causes the commodity sales data processing apparatus to transmit an identity verification request signal to the settlement terminal.

Optionally, in the settlement system according to the first aspect of the invention, the settlement terminal further includes an input operation unit for receiving a password from a customer.

Optionally, in the settlement system according to the first aspect of the invention, the input operation unit is a touch panel display screen.

Optionally, in the settlement system according to the first aspect of the invention, the first short-range communication unit utilizes a near-field communication protocol.

Optionally, in the settlement system according to the first aspect of the invention, the first short-range communication unit utilizes a Bluetooth protocol.

Optionally, in the settlement system according to the first aspect of the invention, the portable terminal includes a fingerprint sensor and the biometric authentication function is a fingerprint comparison.

Optionally, in the settlement system according to the first aspect of the invention, the portable terminal further includes a fingerprint sensor, and the biometric authentication function is a comparison of a fingerprint detected by the fingerprint sensor to fingerprint information registered in portable terminal in advance.

Optionally, in the settlement system according to the first aspect of the invention, the settlement terminal further includes a printer configured to print a transaction receipt.

Optionally, in the settlement system according to the first aspect of the invention, the settlement terminal further includes a magnetic card reader.

According to a second aspect of the invention, it is provided a settlement terminal for a settlement system, the terminal comprising an interface for receiving settlement amount information for settlement of a sales transaction; a short-range communication unit configured to communicate with a portable terminal of a customer in the sales transaction; and a control unit configured to control the short-range communication to request a biometric identity verification by the portable terminal after the settlement amount information has been received via the interface, wherein the control unit is further configured to complete the settlement of the sale transaction if an identity verification signal from the portable terminal indicates the biometric identity verification was successful and not otherwise.

Optionally, in the settlement terminal according to the second aspect of the invention, the interface is connected to a point-of-sale terminal configured to generate the settlement amount information.

Optionally, in the settlement terminal according to the second aspect of the invention, the control unit is configured to request the biometric identity verification in response to an instruction from the point-of-sale terminal.

Optionally, the settlement terminal according to the second aspect of the invention further comprises an input operation unit for receiving a password from a customer.

Optionally, in the settlement terminal according to the second aspect of the invention, the input operation unit is a touch panel display screen.

Optionally, in the settlement terminal according to the second aspect of the invention, the short-range communication unit utilizes a near-field communication protocol.

Optionally, in the settlement terminal according to the second aspect of the invention, the short-range communication unit utilizes a Bluetooth protocol.

Optionally, the settlement terminal according to the second aspect of the invention further comprises a printer configured to print a transaction receipt.

Optionally, the settlement terminal according to the second aspect of the invention further comprises a magnetic card reader.

### BRIEF DESCRIPTION OF THE DRAWINGS

Fig. 1 is a diagram of a settlement system in an embodiment.
Fig. 2 is a perspective view showing an exterior of a settlement terminal.
Fig. 3 is a block diagram of a POS terminal.
Fig. 4 is a block diagram of a settlement terminal.
Fig. 5 is a block diagram of a portable terminal.
Fig. 6 is a block diagram depicting certain functional aspects of a settlement system.
Fig. 7 is a flowchart of processing for a POS terminal.
Fig. 8 is a flowchart of processing for a settlement terminal.
Fig. 9 is a flowchart of processing for a portable terminal.

### DETAILED DESCRIPTION

The present disclosure describes a settlement system having improved security in the performing of identity verification operations.

A settlement system includes a settlement terminal to receive settlement amount information and perform a settlement for receiving a payment and a portable terminal with a biometric authentication function. The settlement terminal has an interface for receiving the settlement amount information, a first short-range communication unit, and a first control unit to control the first short-range communication to request a biometric identity verification by the portable terminal. The portable terminal has a second short-range communication unit and a second control unit configured to cause the biometric authentication function to be performed, and respond to the request for the biometric identity verification via the second short-range communication unit with an identity verification signal. The first control unit completes the settlement operation if the identity verification signal indicates the biometric identity verification was successful and not otherwise.

An example embodiment of a settlement system is explained below with reference to the accompanying drawings. In this embodiment, a system including a POS terminal (or other commodity sales data processing apparatus), a settlement terminal, and a portable terminal are parts of the described settlement system. However, settlement systems of the present disclosure are not limited this particular example embodiment.

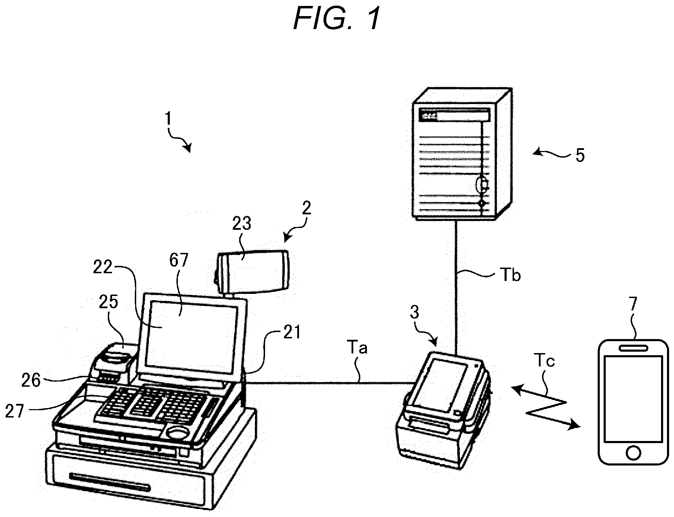

Fig. 1 is a diagram showing a configuration of a settlement system 1 according to an embodiment. As shown in Fig. 1, the settlement system 1 includes a POS terminal 2, a settlement terminal 3, and a portable terminal 7. The settlement terminal 3 in this example is installed near the POS terminal 2. The settlement terminal 3 is communicably connected to the POS terminal 2 via a communication path Ta. The settlement terminal 3 is connected to a server 5 that is mutually communicable with, via a communication path Tb, servers installed in credit companies, banks, and the like. The settlement terminal 3 is communicably connected to the portable terminal 7 via a wireless communication path Tc.

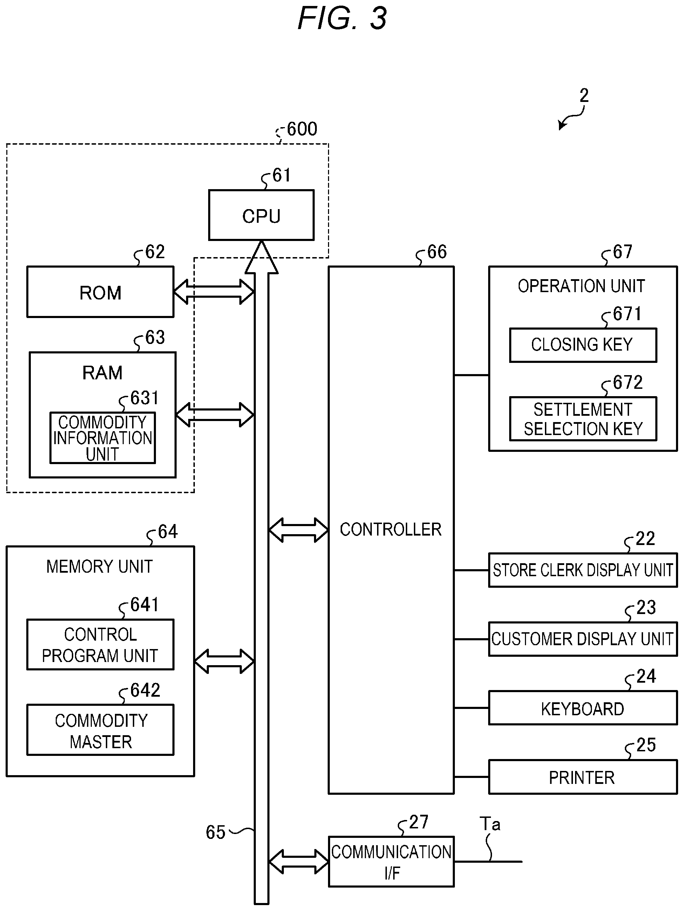

The POS terminal 2 is an apparatus that performs commodity registration processing for a commodity to be purchased by a customer. In this context, commodity registration processing means processing for reading a commodity name and a price of the commodity (collectively referred to as "commodity information") from a commodity master based on a commodity code specifying the commodity, displaying the commodity information, and storing the commodity information in a commodity information unit (see Fig. 3). When finishing a transaction with the customer, the POS terminal 2 calculates a total amount of the purchase of the customer based on the stored commodity information and calculates a payment amount for the customer with added tax as applicable. When the customer settles the payment amount due with a medium other than cash, the POS terminal 2 transmits settlement amount information (generated using the payment amount as a settlement amount) to the settlement terminal 3 via the communication path Ta.

As shown in Fig. 1, the POS terminal 2 includes, in an upper part of a main body 21, a store clerk display unit 22 and a customer display unit 23. The store clerk display unit 22 and the customer display unit 23 are each an LCD (Liquid Crystal Display) or the like, on the surface of which an operation unit 67 such as a touch panel is disposed. These display units display a commodity name and a price of the commodity, the total amount for a transaction and the like. A keyboard 24 is disposed on the upper surface of the main body 21. A printer 25 that prints a receipt or the like is provided on the inside of the main body 21. Receipt paper printed by the printer 25 is dispensed from a receipt dispensing port 26 provided in an upper part of the main body 21. The receipt dispensing port 26 dispenses a receipt on which commodity information of a commodity subjected to sales registration is printed.

The settlement terminal 3 reads card information from various types of cards (a point card (e.g., customer loyalty card), a credit card, a debit card, and the like). Such cards may be a magnetic card, an IC card incorporating an IC (integrated circuit) chip, or the like and communicates with servers of card companies and banks via the server 5 to execute settlement processing associated with the various cards. In the present embodiment, a credit card is used for settlement purposes, but, in general, settlement by the other card types is similar in relevant manner and the credit card example should be considered representative of the other card types.

The settlement terminal 3 accesses, using a short-range wireless communication technology such as NFC (Near Field Communication), a portable terminal 7 brought close to the settlement terminal 3, performs communication with the portable terminal 7, and transmits and receives information and signals to and from the portable terminal 7. The portable terminal 7 may be brought into direct contact with the settlement terminal 3 or just brought close to settlement terminal 3, for example, within a predetermined distance (for example, 10 cm or less). The settlement terminal 3 transmits and receives information and signals to and from the portable terminal 7 by the short-range wireless communication. In general, the settlement terminal 3 does not perform communication with the portable terminal 7 outside the predetermined distance.

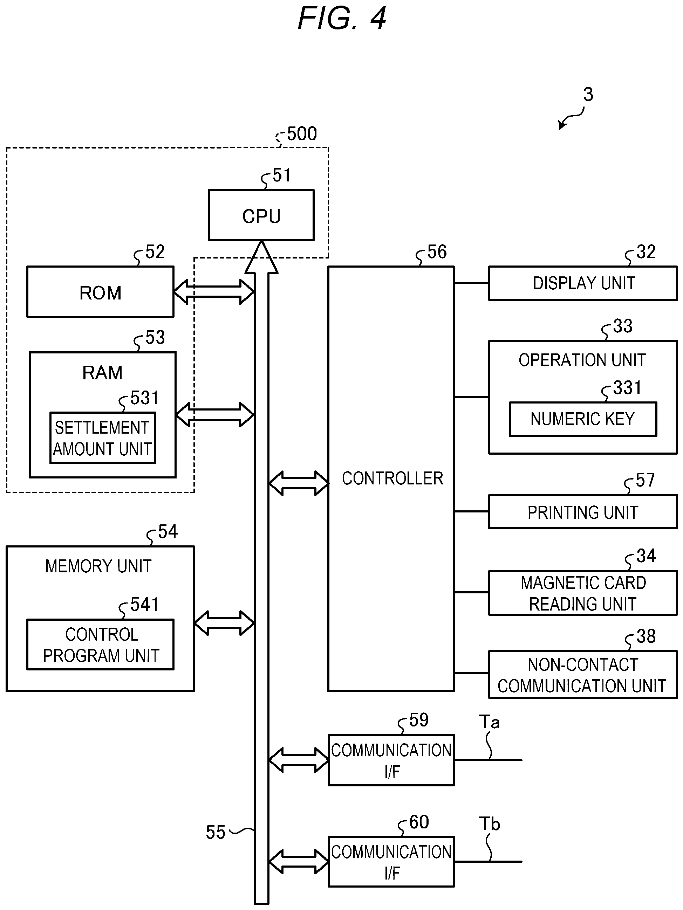

The settlement terminal 3 performs settlement processing based on settlement amount information input from numeric keys 331 (a PIN pad, see Fig. 4) or settlement amount information received from the POS terminal 2.

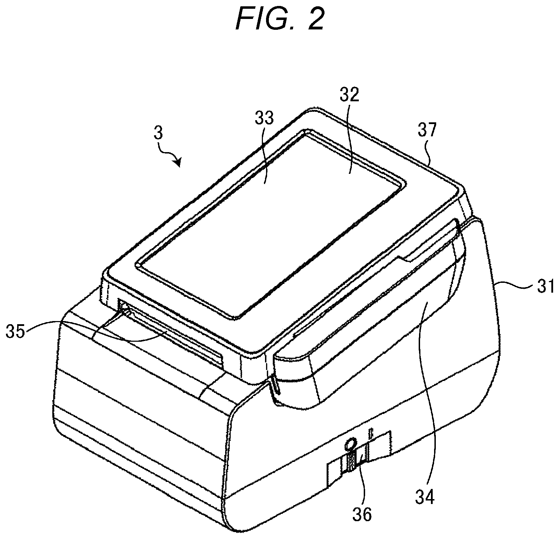

Fig. 2 is a diagram showing an exterior of the settlement terminal 3. As shown in Fig. 2, a power switch 36 is provided on a side portion of a main body 31 of the settlement terminal 3. An upper surface panel 37 that is openable and closable with respect to the main body 31 is provided in an upper part of the main body 31. By opening the upper surface panel 37, roll-like receipt paper can be installed on the inside of the main body 31. A display unit 32, on the surface of which is a touch panel (an operation unit 33) is disposed, is provided on the surface of the upper surface panel 37.

A magnetic card reading unit 34 that magnetically reads information stored in a card for settlement is provided on a side surface upper part of the main body 31. As a card for settlement a credit card or the like can be used. Note that the settlement terminal 3 may include, separately from the magnetic card reading unit 34, or instead of the magnetic card reading unit 34, a card reading unit that electrically comes into contact with an IC chip of a card inserted into the card reading unit to read information stored in the credit card (the IC chip). The settlement terminal 3 electrically reads information stored in the IC chip.

A printing unit 57 (see Fig. 4) that prints information concerning settlement, a sales report, or the like on the receipt paper is provided on the inside of the main body 31. The receipt paper is dispensed from a receipt dispensing port 35 provided between the main body 31 and the upper surface panel 37.

When performing settlement processing, the settlement terminal 3 displays an image of the numeric keys 331 on the display unit 32. The operation unit 33 in a position corresponding to the display functions as the numeric keys 331. When performing settlement processing in the settlement terminal 3, the customer needs to perform an identity verification. The customer inputs a password (or personal identification number) using the numeric keys 331 for the identity verification in this example. The settlement terminal 3 performs the identity verification based on the input password. When the input password coincides with a password registered in advance, the settlement terminal 3 determines that a person who has input the password is verified.

The portable terminal 7 can be a portable electronic terminal such as a smartphone, a PDA (Personal Digital Assistant), a cellular phone, or the like. By being brought close (within a predetermined distance) to the settlement terminal 3, the portable terminal 7 is capable of communicating with the settlement terminal 3 using a short-range wireless communication technology. The portable terminal 7 is capable of detecting/reading a fingerprint of a person using a fingerprint sensor and comparing the fingerprint as read with fingerprint information registered in advance. In this manner, portable terminal 7 can perform identity verification according to whether the fingerprint as read and the registered fingerprint information coincide. To determine whether the fingerprint coincides with the fingerprint information, a fingerprint authentication technology already adopted for smartphones or the like can be used. When the fingerprint and the fingerprint information registered in advance coincide, the portable terminal 7 determines that the person whose fingerprint has been read is verified. When the detected fingerprint and the fingerprint information registered in advance do not coincide, the portable terminal 7 determines that the person is not verified.

In such a settlement system 1, when a commodity purchased in a store is subjected to commodity registration processing in the POS terminal 2 and settlement is performed with a credit card, the POS terminal 2 transmits settlement amount information indicating a settlement amount to the settlement terminal 3. Upon receiving the settlement amount information, the settlement terminal 3 displays an image of the numeric keys 331 on the display unit 32. The customer operates the numeric keys 331 and inputs a password. The settlement terminal 3 determines, based on the input password, whether the customer is verified. If the customer is verified, the settlement terminal 3 executes settlement processing based on the received settlement amount information.

If the customer is a visually impaired person, such a customer sometimes has difficulty in visually recognizing the numeric keys 331 displayed on the display unit 32. In particular, in order to improve security, numbers of the numeric keys 331 in more recent systems are sometimes changed at random. In such a case, a visually impaired person may have substantial difficulty in recognizing the positions of the numbers on the numeric keys 331. Therefore, it is desirable to enable a visually impaired person to perform identity verification without operating the numeric keys 331.

An operator of the POS terminal 2 can operate a settlement selection key 672 (see Fig. 3) provided in the POS terminal 2 and the POS terminal 2 transmits an identity verification request signal to the settlement terminal 3. The settlement terminal 3 having received the identity verification request signal transmits, to the portable terminal 7 carried by the visually impaired person, using the short-range wireless communication, a biometric authentication request signal for requesting identity verification by biometric authentication. Upon receiving the biometric authentication request signal, the portable terminal 7 performs biometric authentication using a fingerprint sensor 84 and determines whether identity is verified. When identity is verified, the portable terminal 7 transmits an identity verification signal indicating that identity is verified to the settlement terminal 3. Upon receiving the identity verification signal, the settlement terminal 3 executes settlement processing based on received settlement amount information. In this way, the settlement terminal 3 can perform identity verification for the visually impaired person.

In response to an authentication request from the settlement terminal 3, the server 5 performs a check such as a negative check of a card and, thereafter, transmits a command for executing authentication to the settlement terminal 3. The server 5 inquires of a card company or a bank whether a credit card about to be subjected to the settlement processing by the settlement terminal 3 is a usable card. Upon receiving, from the server 5, a reply that the credit card is a usable card, the settlement terminal 3 executes the settlement processing.

Fig. 3 is a block diagram showing the hardware configuration of the POS terminal 2. As shown in Fig. 3, the POS terminal 2 includes a CPU (Central Processing Unit) 61, which is an example of a microprocessor, a ROM (Read Only Memory) 62, a RAM (Random Access Memory) 63 functioning as a work area of the CPU 61, and a memory unit 64. The ROM 62 stores various programs. Programs and various data can be loaded in the RAM 63. The memory unit 64 stores various programs. The CPU 61, the ROM 62, the RAM 63, and the memory unit 64 are connected to one another via a bus 65. The CPU 61, the ROM 62, and the RAM 63 form control unit 600. That is, the CPU 61 operates according to a control program stored in the ROM 62 or the memory unit 64 to execute control processing for the POS terminal 2.

The RAM 63 includes a commodity information unit 631. The commodity information unit 631 stores commodity information of a commodity subjected to commodity registration processing (for example, a commodity code for specifying the commodity, a commodity name, a price of the commodity).

The memory unit 64 is a nonvolatile memory such as a HDD (Hard Disc Drive) or a flash memory in which stored information is retained even if power is turned off. The memory unit 64 includes a control program unit 641 that stores a control program and a commodity master 642. The commodity master 642 stores commodity information of commodities in association with commodity codes for the commodities.

The control unit 600 is connected to the operation unit 67, the store clerk display unit 22, the customer display unit 23, the keyboard 24, and the printer 25 via the bus 65 and a controller 66.

The operation unit 67 includes a closing key 671 and a settlement selection key 672. The closing key 671 is a key operated by a customer when processing is to be advanced from commodity registration processing to checkout processing (settlement) at the POS terminal 2. The settlement selection key 672 is a key displayed on the store clerk display unit 22 when settlement by a credit card is selected. A store clerk operates the settlement selection key 672 when the customer is a visually impaired person and the store clerk causes the settlement terminal 3 to perform identity verification for the visually impaired person using biometric authentication. That is, the settlement selection key 672 is a key for permitting a visually impaired person to perform the identity verification using the biometric authentication without inputting a password. The store clerk display unit 22 displays information to an operator (for example, a store clerk) who operates the POS terminal 2. The customer display unit 23 displays information to the customer. The keyboard 24 can be a hardware keyboard that the store clerk operates for performing commodity registration operation. The printer 25 dispenses a receipt with information regarding a transaction.

The controller 66 receives an instruction from the control unit 600 and controls the operation unit 67, the store clerk display unit 22, the customer display unit 23, the keyboard 24, and the printer 25. However, for convenience of explanation, in the following, aspects of control performed by the controller 66 can be considered to be performed or caused by control unit 600 working in conjunction with controller 66.

A communication I/F (Interface) 27 is connected to the control unit 600 via the bus 65. The communication I/F 27 is electrically connected to the settlement terminal 3 via the communication path Ta.

Fig. 4 is a block diagram showing the hardware configuration of the settlement terminal 3. As shown in Fig. 4, the settlement terminal 3 includes a CPU 51 that is an example of a microprocessor, a ROM 52, a RAM 53 functioning as a work area of the CPU 51, a memory unit 54 and the like. The ROM 52 stores various programs. Programs and various data can be loaded in the RAM 53. The memory unit 54 stores various programs. The CPU 51, the ROM 52, the RAM 53, and the memory unit 54 are connected to one another via a bus 55. The CPU 51, the ROM 52, and the RAM 53 form control unit 500. That is, the CPU 51 operates according to a control program stored in the ROM 52 or the memory unit 54 to execute control processing for the settlement terminal 3.

The RAM 53 includes a settlement amount unit 531. The settlement amount unit 531 stores settlement amount information (information concerning a total amount (including a consumption tax) for purchased items) for performing settlement processing received from the POS terminal 2.

The memory unit 54 is a nonvolatile memory such as a flash memory in which stored information is retained even if power is turned off. In this example, memory unit 54 includes a control program unit 541 that stores a control program.

A controller 56 is connected to the display unit 32 and the operation unit 33. The controller 56 executes various kinds of control based on instructions of a control unit 100. The display unit 32 displays various kinds of information including an image of the numeric keys 331. The operation unit 33 in this example is a touch panel provided on the display unit 32. Various kinds of key input operations can be executed by touching the touch panel in positions corresponding to displayed keys such as the numeric keys 331 displayed on the display unit 32.

The printing unit 57 and the magnetic card reading unit 34 are connected to the controller 56. The printing unit 57 prints commodity information, settlement information, and the like on the receipt paper using, for example, a thermal head. The magnetic card reading unit 34 reads card information magnetically stored on the credit card. Note that the settlement terminal 3 may also include an IC chip reading unit separately from the magnetic card reading unit 34 or instead of the magnetic card reading unit 34. In this case, the IC chip reading unit reads card information stored in an IC chip.

The controller 56 is connected to a non-contact communication unit 38. The non-contact communication unit 38 performs, via the communication path Tc, wireless communication with the portable terminal 7 located within a predetermined distance.

The bus 55 connects communication I/Fs 59 and 60. The communication I/F 59 is connected to the POS terminal 2 via the communication path Ta. The communication I/F 60 is connected to the server 5 via the communication path Tb.

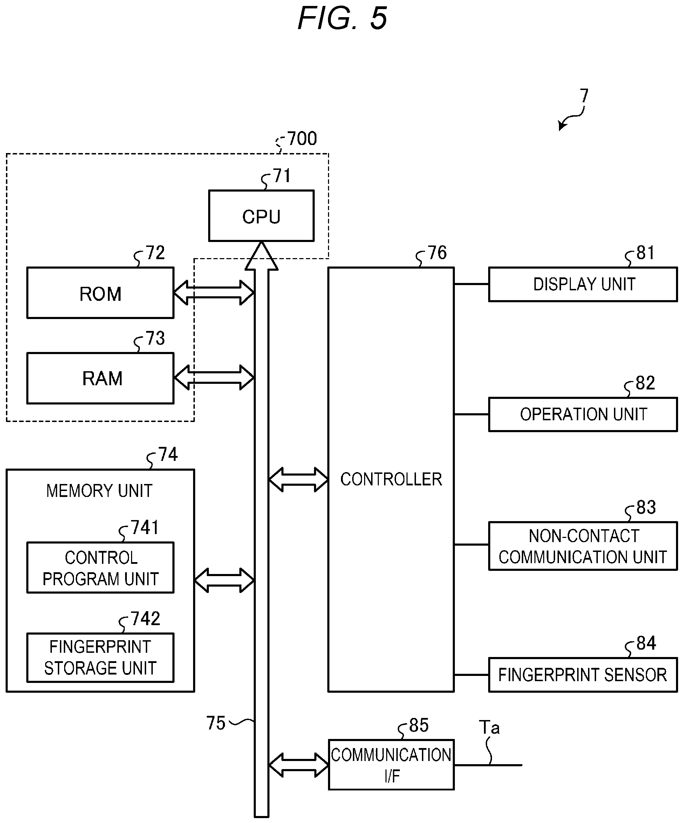

Fig. 5 is a block diagram showing the hardware configuration of the portable terminal 7. As shown in Fig. 5, the portable terminal 7 includes a CPU 71 that is an example of a microprocessor, a ROM 72, a RAM 73 functioning as a work area of the CPU 71, a memory unit 74 and the like. The ROM 72 stores various programs. Programs and various data can be loaded in the RAM 73. The memory unit 74 stores various programs. The CPU 71, the ROM 72, the RAM 73, and the memory unit 74 are connected to one another via a bus 75. The CPU 71, the ROM 72, and the RAM 73 form control unit 700. That is, the CPU 71 operates according to a control program to execute control processing for the portable terminal 7.

The memory unit 74 is a nonvolatile memory such as a flash memory in which stored information is retained even if power is turned off. The memory unit 74 includes a control program unit 741 that stores a control program and a fingerprint storage unit 742. The fingerprint storage unit 742 stores fingerprint information registered in advance for a person who carries the portable terminal 7.

A controller 76 is connected to a display unit 81 and an operation unit 82. The controller 76 executes various kinds of control based on instructions of the control unit 100. The controller 56 is connected to a non-contact communication unit 83. The non-contact communication unit 83 performs (short-range) wireless communication with a settlement terminal 3 via the communication path Tc.

The controller 76 is connected to the fingerprint sensor 84. The fingerprint sensor 84 is, for example, a fingerprint sensor of a capacitance type and is incorporated in, for example, a home button of the portable terminal 7. When a finger comes into contact with the fingerprint sensor 84, electric charges accumulate in convex portions of the fingerprint rather than concave portions. The fingerprint sensor 84 maps a change in the electric charges to detect fingerprint data.

The bus 75 connects a communication I/F 85 to the control unit 700. The communication I/F 85 is connected to other apparatuses to transmit and receive information to and from the other apparatuses.

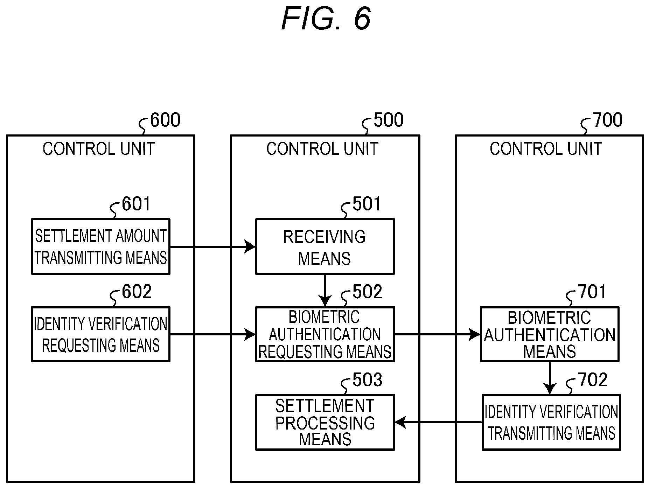

Certain functional aspects of the POS terminal 2, the settlement terminal 3, and the portable terminal 7 as elements of the settlement system 1 are explained. Fig. 6 is a functional block diagram of the settlement system 1. The CPU 61 operates according to a program stored in the control program unit 641, whereby the control unit 600 of the POS terminal 2 functions as settlement amount transmitting means 601 and identity verification requesting means 602. The CPU 51 operates according to a program stored in the control program unit 541, whereby the control unit 500 of the settlement terminal 3 functions as receiving means 501, biometric authentication requesting means 502, and settlement processing means 503. The CPU 71 operates according to a program stored in the control program unit 741, whereby the control unit 700 of the portable terminal 7 functions as biometric authentication means 701 and identity verification transmitting means 702.

The settlement amount transmitting means 601 transmits settlement amount information for performing settlement processing to the settlement terminal 3.

When the settlement selection key 672 is operated, the identity verification requesting means 602 transmits an identity verification request signal for requesting the settlement terminal 3 to perform identity verification. Specifically, when the settlement selection key 672 is operated for permitting a visually impaired person to perform identity verification, the identity verification requesting means 602 transmits an identity verification request signal for requesting the settlement terminal 3 to perform identity verification using biometric authentication.

The receiving means 501 receives settlement amount information for performing the settlement processing. In an embodiment, the receiving means 501 receives the settlement amount information transmitted by the settlement amount transmitting means 601 and stores the settlement amount information in the settlement amount unit 531.

When the receiving means 501 receives the settlement amount information, the biometric authentication requesting means 502 requests the portable terminal 7, which is capable of performing communication with the short-range wireless communication technology, to perform identity verification by the biometric authentication. In an embodiment, when the receiving means 501 receives the settlement amount information and the identity verification request signal transmitted by the identity verification requesting means 602, the biometric authentication requesting means 502 requests a portable terminal 7 that has been brought withing a predetermined distance from the settlement terminal 3 to perform identity verification by biometric authentication.

When receiving a request for identity verification by biometric authentication from the settlement terminal 3, the biometric authentication means 701 performs the biometric authentication for identity verification using a biometric authentication function. In an embodiment, when receiving the request for the identity verification by biometric authentication from the settlement terminal 3, the biometric authentication means 701 compares a fingerprint detected by the fingerprint sensor 84 and the fingerprint information already stored in the fingerprint storage unit 742 and performs fingerprint authentication by determining whether the fingerprint detected by the fingerprint sensor 84 and the fingerprint information stored in the fingerprint storage unit 742 coincide.

When the fingerprints coincide, identity is considered verified (the person whose fingerprint is registered in the portable terminal 7 is confirmed), the identity verification transmitting means 702 transmits an identity verification signal to the settlement terminal 3.

When the settlement processing means 503 receives the identity verification signal from the portable terminal 7, the settlement processing means 503 executes the settlement processing according to the settlement amount information. When the settlement processing means 503 has requested the identity verification but does not receive the identity verification signal, the settlement processing means 503 does not execute the settlement processing. In an embodiment, when the settlement processing means 503 receives the identity verification signal from the portable terminal 7, the settlement processing means 503 executes the settlement processing based on the settlement amount information received by the receiving means 501. When the biometric authentication requesting means 502 has requested the identity verification by the biometric authentication but the settlement processing means 503 does not receive the identity verification signal from the portable terminal 7, the settlement processing means 503 does not execute the settlement processing.

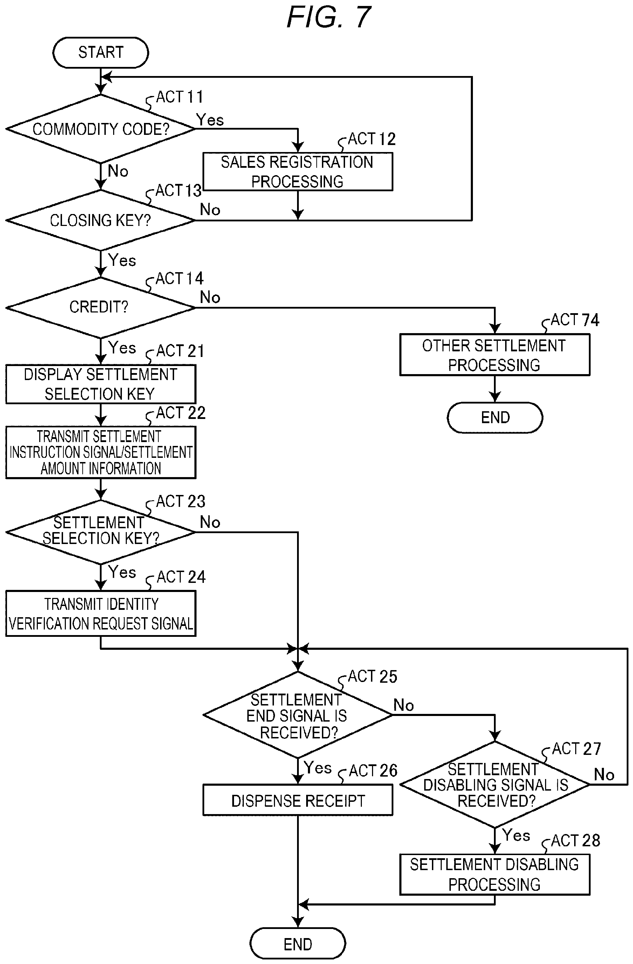

Fig. 7 is a flowchart of control processing for the POS terminal 2. As shown in Fig. 7, the control unit 600 of the POS terminal 2 reads a symbol attached to a commodity and determines whether a commodity code for specifying the commodity has been acquired (ACT 11). When determining that the commodity code has been acquired (Yes in ACT 11), the control unit 600 executes commodity registration processing for the commodity using the commodity code (ACT 12). The control unit 600 returns to ACT 11.

If a commodity code is not acquired (No in ACT 11), the control unit 600 checks whether the closing key 671 has been operated (ACT 13). When the closing key 671 has been operated (Yes in ACT 13), the control unit 600 next determines whether a credit key or the like provided in the operation unit 67 or the keyboard 24 has been operated for payment by a credit card (ACT 14). When payment by the credit card has been selected (Yes in ACT 14), the control unit 600 displays an image of the settlement selection key 672 on the store clerk display unit 22 (ACT 21). The control unit 600 also provides the settlement selection key 672 in the operation unit 67 corresponding to the image of the settlement selection key 672 (ACT 21). The settlement amount transmitting means 601 then transmits, to the settlement terminal 3, settlement amount information indicating a settlement amount to be paid by a customer for the item(s) subjected to the commodity registration processing (ACT 22). Note that the settlement amount transmitting means 601 transmits, together with the settlement amount information, a settlement instruction signal for instructing to perform settlement processing with a credit card (ACT 22). Note that, if the closing key 671 has not been operated (No in ACT 13), the control unit 600 returns to ACT 11.

When determining that the customer is a visually impaired person, a store clerk operates the settlement selection key 672 displayed in ACT 21. If the customer is not a visually impaired person, the store clerk does not operate the settlement selection key 672 displayed in ACT 21. Subsequently, the control unit 600 determines whether the settlement selection key 672 has been operated (ACT 23). When selection key 672 has been operated (Yes in ACT 23), the identity verification requesting means 602 transmits, to the settlement terminal 3, an identity verification request signal for requesting identity verification relating to the customer performed using biometric authentication (ACT 24).

The control unit 600 then checks whether a settlement end signal indicating that the settlement processing has ended has been received from the settlement terminal 3 (ACT 25). If the settlement end signal has been received (Yes in ACT 25), the control unit 600 dispenses a receipt printed by the printer 25 (ACT 26). The control unit 600 then ends the processing.

When determining in ACT 23 that the settlement selection key 672 has not been operated (the store clerk has determined that the customer is not a visually impaired person) (No in ACT 23), without executing the processing in ACT 24, the control unit 600 determines whether a settlement end signal indicating that the settlement processing has ended has been received from the settlement terminal 3 (ACT 25). The control unit 600 executes the processing in ACT 25 and subsequent steps.

Note that, in ACT 25 if the settlement end signal has not been received (No in ACT 25), the control unit 600 next checks whether a settlement disabling signal indicating that settlement relating to the transaction has been disabled (the settlement processing can not be performed) because the identity verification has been unsuccessful has been received from the settlement terminal 3 (ACT 27). If settlement disabling signal has not been received, the control unit 600 returns to ACT 25 (No in ACT 27). If the settlement disabling signal has been received (Yes in ACT 27), the control unit 600 does not perform the settlement processing for the transaction and executes settlement disabling processing for displaying, on the store clerk display unit 22 and the customer display unit 23, a message to the effect that the transaction is stopped because the identity verification has been unsuccessful (ACT 28). The control unit 600 ends the processing.

Note that the settlement disabling processing may include display of a message for urging settlement be performed by a method that does not require identity verification. The settlement disabling processing may include processing for erasing, from the commodity information unit 631, information concerning the items subjected to the commodity registration processing performed in the transaction. The control unit 600 may perform additional processing related to the transaction not being completed.

When payment method other than the credit card has been selected in ACT 14 (No in ACT 14), the control unit 600 executes settlement processing with the selected method (ACT 74). The control unit 600 ends the processing.

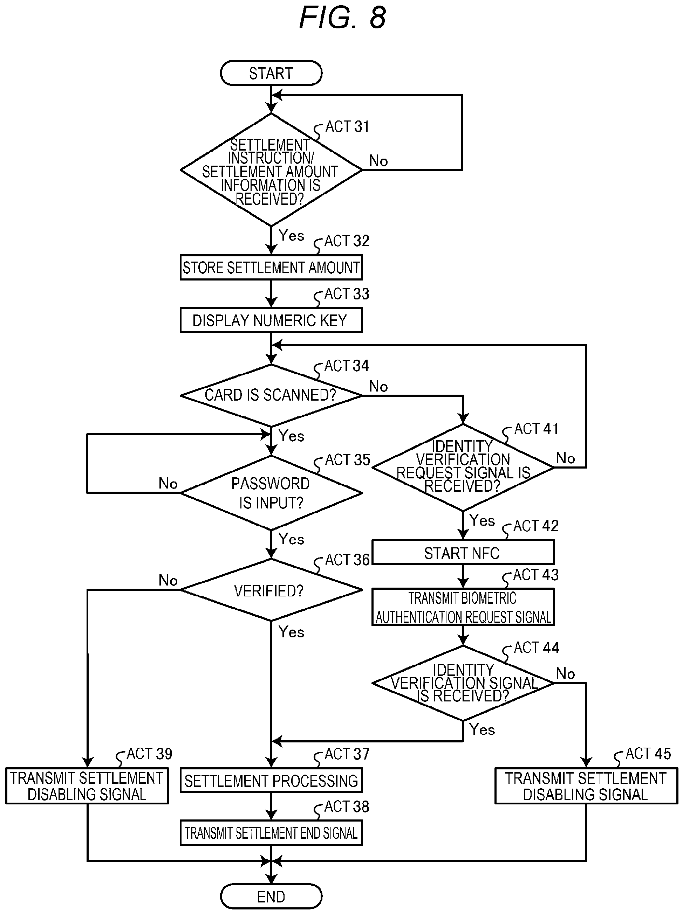

Fig. 8 is a flowchart of the control processing for the settlement terminal 3. As shown in Fig. 8, the control unit 500 of the settlement terminal 3 determines whether the settlement amount information and the settlement instruction signal have been received from the POS terminal 2 (ACT 31). The control unit 500 stays on standby (No in ACT 31) until the settlement amount information and the settlement instruction signal are received. When the control unit 500 determines that the settlement amount information and the settlement instruction signal have been received from the POS terminal 2 (Yes in ACT 31), the receiving means 501 stores the received settlement amount information in the settlement amount unit 531 (ACT 32). That is, the receiving means 501 accepts the received settlement amount information. Subsequently, the control unit 500 causes the display unit 32 to display the numeric keys 331 on which numbers 0 to 9 are written (ACT 33) and causes the operation unit 33 to have the function of the numeric keys 331.

Subsequently, the control unit 500 determines whether a credit card has been inserted into the magnetic card reading unit 34 and scanned (read) (ACT 34). When the credit card has been scanned (Yes in ACT 34), the control unit 500 next determines whether a password has been input from the numeric keys 331 (ACT 35). The control unit 500 stays on standby (No in ACT 35) until a password is input and, when determining that a password has been input (Yes in ACT 35), the control unit 500 performs identity verification according to whether the input password and a password read from the scanned card coincide (ACT 36). When the input password and the password read from the scanned card coincide, the control unit 500 determines that identity is verified. When the input password and the password read from the scanned card do not coincide, the control unit 500 determines that the person who has input the password is not verified.

When the control unit 500 determines that identity is verified (Yes in ACT 36), the settlement processing means 503 executes settlement processing with a credit card based on the settlement amount information stored in the settlement amount unit 531 (ACT 37). The control unit 500 transmits, to the POS terminal 2, a settlement end signal indicating that the settlement processing has ended (ACT 38). The control unit 500 then ends the processing.

When determining in ACT 36 that the person who has input the password is not verified (No in ACT 36), the control unit 500 transmits a settlement disabling signal to the POS terminal 2 (ACT 39). The control unit 500 then ends the processing.

Upon determining in ACT 34 that the credit card has not been scanned (No in ACT 34), the control unit 500 then determines whether an identity verification request signal has been received from the POS terminal 2 (ACT 41). If identity verification request signal has not been received (No in ACT 41), the control unit 500 returns to ACT 34. If the identity verification request signal has been received from the POS terminal 2 (Yes in ACT 41), the control unit 500 starts the non-contact communication unit 38 for performing the short-range wireless communication (ACT 42). Note that the control unit 500 desirably performs, at timing for processing ACT 42, a voice announcement requesting the bringing of the portable terminal 7 close to the settlement terminal.

Subsequently, the biometric authentication requesting means 502 transmits a biometric authentication request signal for requesting to perform biometric authentication in the portable terminal 7 (ACT 43). A portable terminal 7 brought close to the settlement terminal 3 receives the biometric authentication request signal. That is, the biometric authentication requesting means 502 requests using the short-range wireless communication technology that the portable terminal 7 located within the predetermined distance perform identity verification by biometric verification. Note that a communication scheme between the settlement terminal 3 and the portable terminal 7 using the short-range wireless communication technology does not need to be any specific scheme. Various communication schemes, protocols, and the like are applicable as the communication scheme in this context.

When the identity verification by the biometric authentication has been performed in the portable terminal 7 the settlement terminal 3 receives, from the portable terminal 7, using the short-range wireless communication technology, an identity verification signal indicating that identity is verified. The control unit 500 determines whether the identity verification signal has been received from the portable terminal 7 (ACT 44). When determining that the identity verification signal has been received from the portable terminal 7 (Yes in ACT 44), the settlement processing means 503 executes the processing in ACT 37. The control unit 500 executes the processing in ACT 38. The control unit 500 stops the non-contact communication unit 38 upon ending the processing in ACT 38. On the other hand, when receiving a signal from the portable terminal 7 to the effect that the person who has performed the identity verification cannot be verified (No in ACT 44), the control unit 500 transmits a settlement disabling signal to the settlement terminal 3 (ACT 45). That is, the control unit 500 does not execute the settlement processing when the control unit 500 has requested the identity verification but not received the identity verification signal. The control unit 500 stops the non-contact communication unit 38 upon ending the processing in ACT 45. The control unit 500 then ends the processing.

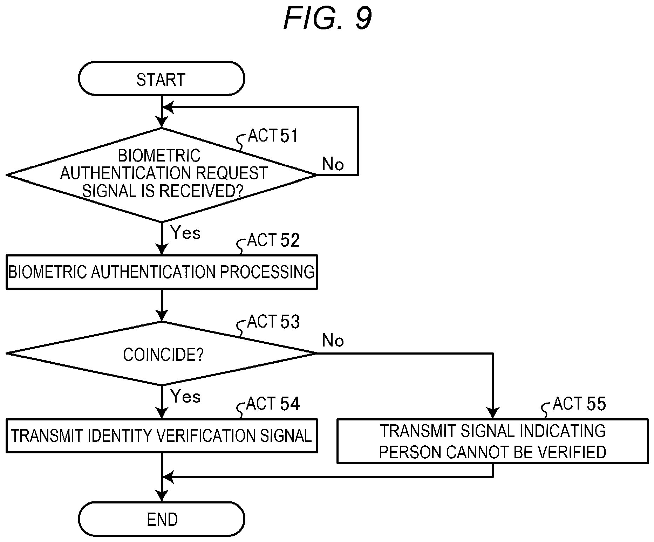

Fig. 9 is a flowchart of control processing for the portable terminal 7. As shown in Fig. 9, the control unit 700 of the portable terminal 7 determines whether the biometric authentication request signal has been received from the settlement terminal 3 (ACT 51). The control unit 700 stays on standby (No in ACT 51) until the biometric authentication request signal is received). When the biometric authentication request signal has been received from the settlement terminal 3 (Yes in ACT 51), the biometric authentication means 701 performs biometric authentication for identity verification using a biometric authentication function (ACT 52). In an embodiment, the biometric authentication means 701 compares a fingerprint detected by the fingerprint sensor 84 and the fingerprint information stored in the fingerprint storage unit 742 (ACT 52) .

Subsequently, the control unit 700 determines, based on a result of the biometric authentication, whether a person whose fingerprint has been detected by the fingerprint sensor 84 is verified as a person who owns the portable terminal 7 (ACT 53). When the fingerprint detected by the fingerprint sensor 84 and the fingerprint information stored in the fingerprint storage unit 742 coincide, the control unit 700 determines that the person whose fingerprint has been detected by the fingerprint sensor 84 is verified as the person who owns the portable terminal 7. When the fingerprint detected by the fingerprint sensor 84 and the fingerprint information stored in the fingerprint storage unit 742 do not coincide, the control unit 700 determines that the person whose fingerprint has been detected by the fingerprint sensor 84 is not verified.

When determining that the person whose fingerprint has been detected by the fingerprint sensor 84 is verified as the person who owns the portable terminal 7 (Yes in ACT 53), the identity verification transmitting means 702 transmits, to the settlement terminal 3, an identity verification signal indicating that the person is verified as the person who owns the portable terminal 7 (ACT 54). In the present example, the control unit 700 performs a voice announcement to cause the person to bring the portable terminal 7 close to the settlement terminal 3. The portable terminal 7 transmits the identity verification signal to the settlement terminal 3 (ACT 54). The control unit 700 then ends the processing.

When determining that the person whose fingerprint has been detected by the fingerprint sensor 84 can not be verified as the person who owns the portable terminal 7 (No in ACT 53), the control unit 700 transmits, to the settlement terminal 3, a signal to the effect that the person cannot be verified (ACT 55). The control unit 700 then ends the processing.

In such a settlement system 1, the POS terminal 2 transmits the settlement amount information used for the settlement to the settlement terminal 3 and, when the visually impaired person performs settlement, the POS terminal 2 transmits the identity verification request signal to the settlement terminal 3 when the store clerk operates the settlement selection key 672 displayed on the POS terminal 2. The settlement terminal 3 that has received the identity verification request signal transmits, using the short-range wireless communication technology, the biometric authentication request signal to the portable terminal 7 brought close to the predetermined distance or less with respect to the settlement terminal 3. The portable terminal 7 that has received the biometric authentication request signal performs the identity verification by the biometric authentication. When the identity verification has been successful, the portable terminal 7 transmits the identity verification signal to the settlement terminal 3 when being brought close to the predetermined distance or less with respect to the settlement terminal 3. The settlement terminal 3 that has received the identity verification signal executes the settlement processing based on the settlement amount information received from the POS terminal 2.

With such a settlement system 1, a customer who is a visually impaired person can perform the identity verification without inputting a password. Also, since a password is not used, it is possible to improve security in performing the identity verification.

The settlement system 1 in an embodiment includes the settlement terminal 3 and the portable terminal 7 including a biometric authentication function. The settlement terminal 3 includes the receiving means 501 for receiving input settlement amount information for performing settlement processing and the biometric authentication requesting means 502 for, when the receiving means 501 receives the settlement amount information, requesting the portable terminal 7, which is capable of performing communication with a short-range wireless communication technology, to perform identity verification by biometric authentication. The portable terminal 7 includes the biometric authentication means 701 for performing the biometric authentication and the identity verification transmitting means 702 for transmitting an identity verification signal to the settlement terminal 3. The settlement terminal 3 includes the settlement processing means 503 for executing the settlement processing based on the settlement amount information when the settlement terminal 3 receives the identity verification signal but does not execute settlement processing when the settlement terminal 3 has requested the identity verification but does not receive the identity verification signal.

With such a settlement system 1, when receiving the settlement amount information, the settlement terminal 3 requests the portable terminal 7 to perform the identity verification by biometric authentication. The portable terminal 7 performs the biometric authentication using a biometric authentication function in response to the request and, when identity is verified, transmits the identity verification signal to the settlement terminal 3. When the settlement terminal 3 receives the identity verification signal, the settlement terminal 3 executes the settlement processing based on the settlement amount information. When the settlement terminal 3 has requested the identity verification but does not receive the identity verification signal, the settlement terminal 3 does not execute the settlement processing. Therefore, such a settlement system 1 in the embodiment can improve security in performing the identity verification.

In an embodiment, the POS terminal 2, the settlement terminal 3, and the portable terminal 7 configure the settlement system 1. However, in other examples, the POS terminal 2 does not always have to be included in the settlement system. For example, the settlement terminal 3 and the portable terminal 7 alone may configure the settlement system 1.

In an embodiment, the settlement terminal 3 receives the settlement amount information from the POS terminal 2. However, in other examples, the settlement amount information generated by the POS terminal 2 or the like may be input manually using the operation unit 33 of the settlement terminal 3.

In an embodiment, the settlement terminal 3 is separate from the POS terminal 2. However, in other examples, both apparatuses may be inside a common housing or otherwise integrated with each other. That is, the settlement terminal 3 may be incorporated in the POS terminal 2. In this case, functional aspects of a settlement terminal unit or the like in the POS terminal 2 correspond to those described for the settlement terminal 3.

In an embodiment, the biometric authentication performed by the portable terminal 7 is fingerprint authentication. However, in other examples, the portable terminal 7 may use another authentication technology such as face authentication or vein authentication.

In an embodiment, near-field communication (NFC) is the short-range wireless communication technology. However, in other examples, a Bluetooth^{®} protocol or similar technology may be used for short-range wireless communication.

In an embodiment, when the settlement selection key 672 is operated so a visually impaired person can perform the settlement using a credit card with biometric authentication technology being used for the identity verification. However, the operation of the settlement selection key 672 or for this specific purpose is not essential in all examples. The biometric authentication technology used to perform identity verification not only for the visually impaired but any or all customers who wish to perform settlement using credit cards. The settlement selection key 672 may be absent and such biometric authentication process via a portable terminal 7 may be initiated automatically when credit card settlement is requested or required.

In an embodiment, the settlement processing by the credit card is used as the settlement method requiring identity verification. However, any settlement method for which identity verification needs to be performed can be adopted in a similar manner as the credit card settlement method.

In an embodiment, the settlement terminal 3 performs the settlement processing relating to the purchase of a commodity. However, in other examples, an ATM (automatic teller machine) or the like that is installed in, for example, a bank to which a price or a monetary amount is transferred (equivalent to a settlement) may be used as a settlement apparatus. In this case, the identity verification using the biometric authentication can performed between the portable terminal 7 and the ATM.

While certain embodiments have been described, these embodiments have been presented as examples and are not intended to limit scopes of the embodiments. These novel embodiments can be implemented in various other forms, and various omissions, replacements, and changes can be made without departing from the scope of the disclosure as defined by the appended claims. The accompanying claims and their equivalents are intended to cover such forms or modifications as would fall within the scope of the disclosure.

## Claims

1. A settlement system, comprising:
a settlement terminal configured to receive settlement amount information and perform a settlement operation for receiving a payment corresponding to the settlement amount information; and
a portable terminal including a biometric authentication function, wherein
the settlement terminal includes:
an interface for receiving the settlement amount information,
a first short-range communication unit, and
a first control unit configured to control the first short-range communication to request a biometric identity verification by the portable terminal after the settlement amount information has been received; and
the portable terminal includes:
a second short-range communication unit, and
a second control unit configured to:
cause the biometric authentication function to be performed, and
respond to the request for the biometric identity verification via the second short-range communication unit with an identity verification signal; and
the first control unit is further configured to complete the settlement operation if the identity verification signal indicates the biometric identity verification was successful and not otherwise.

2. The settlement system according to claim 1, further comprising:
a commodity sales data processing apparatus configured to:
register items in a transaction,
generate the settlement amount information according to the items registered in the transaction, and
send the settlement amount information to settlement terminal, wherein the commodity sales data processing apparatus preferably includes:
a settlement method selection key, and
an identity verification requesting operation element which when operated causes the commodity sales data processing apparatus to transmit an identity verification request signal to the settlement terminal.

3. The settlement system according to claim 1 or 2, wherein the settlement terminal further includes:
an input operation unit for receiving a password from a customer, wherein the input operation unit is preferably a touch panel display screen.

4. The settlement system according to any of claims 1 to 3, wherein the first short-range communication unit utilizes a near-field communication protocol.

5. The settlement system according to any of claims 1 to 4, wherein the first short-range communication unit utilizes a Bluetooth protocol.

6. The settlement system according to any of claims 1 to 5, wherein the portable terminal includes a fingerprint sensor and the biometric authentication function is a fingerprint comparison.

7. The settlement system according to any of claims 1 to 6, wherein
the portable terminal further includes a fingerprint sensor, and
the biometric authentication function is a comparison of a fingerprint detected by the fingerprint sensor to fingerprint information registered in portable terminal in advance.

8. The settlement system according to any of claims 1 to 7, wherein the settlement terminal further includes:
a printer configured to print a transaction receipt.

9. The settlement system according to any of claims 1 to 8, wherein the settlement terminal further includes a magnetic card reader.

10. A settlement terminal for a settlement system, the terminal comprising:
an interface for receiving settlement amount information for settlement of a sales transaction;
a short-range communication unit configured to communicate with a portable terminal of a customer in the sales transaction; and
a control unit configured to control the short-range communication to request a biometric identity verification by the portable terminal after the settlement amount information has been received via the interface, wherein
the control unit is further configured to complete the settlement of the sale transaction if an identity verification signal from the portable terminal indicates the biometric identity verification was successful and not otherwise.

11. The settlement terminal according to claim 10, wherein the interface is connected to a point-of-sale terminal configured to generate the settlement amount information, wherein the control unit is preferably configured to request the biometric identity verification in response to an instruction from the point-of-sale terminal.

12. The settlement terminal according to claim 10 or 11, further comprising:
an input operation unit for receiving a password from a customer, wherein the input operation unit is preferably a touch panel display screen.

13. The settlement terminal according to any of claims 10 to 12, wherein the short-range communication unit utilizes a near-field communication protocol and/or a Bluetooth protocol.

14. The settlement terminal according to any of claims 10 to 13, further comprising:
a printer configured to print a transaction receipt.

15. The settlement terminal according to any of claims 10 to 14, further comprising:
a magnetic card reader.
